# FASCICULE DE BREVET EUROPEEN

(11) **EP 2 028 352 B1**
(45) Date de publication et mention de la délivrance du brevet: **02.03.2011**
(21) Numéro de dépôt: 08162862.0
(22) Date de dépôt: 22.08.2008
(51) Int. Cl.: F02C 7/32, F02C 7/36

(54) **Moteur à turbine à gaz avec moyen d'entraînement pour le boitier d'accessoires et procédé de montage dudit moteur**
Gasturbinenmotor mit Antriebsmittel für das Zubehörgehäuse und Montageverfahren für besagten Motor
Gas turbine engine with means of driving the turbine accessory drive gearbox assembly and method of assembling said engine

(30) Priorité: 23.08.2007 FR 0705984
(43) Date de publication de la demande: 25.02.2009
(73) Titulaire: SNECMA, 75015 Paris (FR)
(72) Inventeur: Pierrot, Arnaud, 77350, Le Mée sur Seine (FR); Rousselin, Stéphane, 77850 Hericy (FR)
(74) Mandataire: David, Daniel

(56) Documents cités:
- EP-A- 1 574 687
- EP-A- 1 748 170
- EP-A- 1 813 792
- GB-A- 1 323 787
- US-A- 5 349 814

## Description

L'invention concerne un moteur à turbine à gaz à double corps avec des moyens d'entraînement des engrenages du boîtier sur lequel sont montés les accessoires.

Une partie de la puissance générée par un moteur aéronautique à turbine à gaz est utilisée pour alimenter différents organes accessoires, à la fois du moteur mais aussi de l'aéronef dont le moteur participe à la propulsion.

Une partie de cette puissance est actuellement prélevée au niveau du compresseur haute pression (HP), dont l'air comprimé est utilisé, notamment, pour assurer la pressurisation et le conditionnement de la cabine de l'aéronef ou encore le dégivrage. Une autre partie de cette puissance est prélevée mécaniquement sur l'arbre de l'étage HP du moteur, pour entraîner l'arbre d'entrée d'un boîtier d'accessoires placé sur un carter du moteur. Cet arbre d'entrée est entraîné en rotation par un arbre radial de transmission s'étendant dans un bras structural du carter intermédiaire, lui-même entraîné par un pignon solidaire de l'arbre HP.

Le boîtier à engrenages pour les accessoires, bien connu de l'homme du métier sous sa dénomination anglaise "Accessory Gear Box" (AGB), supporte différentes machines, ou accessoires, par exemple un générateur, un starter, un alternateur, des pompes hydrauliques, à carburant ou à huile, ... Ces divers accessoires sont entraînés mécaniquement par l'arbre HP par l'intermédiaire d'arbres radiaux de transmission.

La tendance actuelle vise à augmenter la part du prélèvement de puissance mécanique en raison du rôle croissant des moyens électriques, réputés plus souples d'emploi.

Cependant, un prélèvement de puissance mécanique trop élevé a un effet négatif sur le fonctionnement du corps HP, car il est susceptible de provoquer le pompage du compresseur, en particulier quand le moteur fonctionne à bas régime.

Il est connu par la demande de brevet FR2882096 de prélever une partie de la puissance mécanique sur le corps basse pression (BP). En référence à la figure 1, la demande de brevet FR2882096 décrit un turbomoteur avec des pignons d'entraînement HP et BP solidaires respectivement des arbres des compresseurs HP et BP, les pignons d'entraînement HP et BP entraînant des arbres radiaux de transmission du boîtier d'accessoires.

Le montage des arbres radiaux de transmission avec les pignons d'entraînement sur les arbres des compresseurs BP et HP nécessite un réglage précis. Le pignon d'entraînement BP est monté de manière solidaire sur l'arbre de compresseur BP avec un renvoi d'angle correspondant à l'inclinaison de l'arbre radial de transmission avec lequel il engrène. La position axiale du renvoi d'angle est assurée par une cale de réglage, dont la dimension doit être définie très précisément pour assurer une transmission de puissance optimale entre l'arbre BP et l'arbre radial. Cette définition de la dimension de la cale est difficile à obtenir compte tenu des tolérances de fabrication des différentes pièces.

Ainsi, si le positionnement axial du pignon d'entraînement BP n'est pas correct, il est nécessaire de retirer les arbres radiaux de transmission, de modifier le renvoi d'angle, en reprenant sa cote, et de repositionner les arbres radiaux de transmission. Le montage du turbomoteur nécessite de répéter des étapes de positionnement et de reprise de cote des pignons d'entraînement, ce qui augmente le temps de montage du turbomoteur.

Un tel montage est d'autant plus complexe que les pignons d'entraînement sont positionnés en l'absence des arbres radiaux de transmission, leur centrage étant alors plus difficile.

C'est pourquoi, la Demanderesse a cherché à développer un nouvel aménagement de la prise de puissance sur les deux arbres moteurs afin de pallier ces inconvénients.

C'est ainsi que l'invention concerne un moteur à turbine à gaz à double corps selon la revendication 1, comportant un rotor haute pression et un rotor basse pression, montés dans des paliers supportés par un carter intermédiaire, au moins un boîtier d'accessoires, un moyen d'entraînement, entraînant des arbres radiaux et coaxiaux de transmission de mouvement vers le boîtier d'accessoires, le moyen d'entraînement comportant un pignon d'entraînement haute pression entraînant un desdits arbres radiaux, relié au rotor haute pression, un pignon d'entraînement basse pression, relié au rotor basse pression en amont du rotor haute pression entraînant l'autre desdits arbres radiaux, tel que le pignon d'entraînement basse pression est supporté dans le carter intermédiaire par un palier de positionnement axial.

Grâce à l'invention, le pignon d'entraînement basse pression (BP) est positionné axialement par rapport à l'arbre radial de transmission en s'affranchissant des tolérances de fabrication.

Le montage du pignon BP est réalisé préalablement au montage du rotor BP alors que l'arbre radial de transmission est déjà en position, seules des pièces légères étant manipulées.

De préférence, le moyen d'entraînement comprend deux pignons d'entraînement des arbres radiaux formant un module de prise de mouvement monté dans un boîtier de protection solidaire du carter intermédiaire.

Le pignon d'entraînement basse pression comporte avantageusement un moyen de calage permettant de régler sa position axiale avec un pignon de prise de mouvement solidaire de l'arbre radial de transmission.

Des cannelures de transmission de puissance sont formées sur la face interne du pignon d'entraînement basse pression et sur la face externe de l'arbre du rotor basse pression, les cannelures coopérant entre elles pour transmettre le mouvement du rotor basse pression au pignon basse pression.

De préférence encore, le palier de positionnement axial se présente sous la forme d'un roulement à billes dont les billes sont maintenues entre une bague de maintien intérieure, reliée au pignon d'entraînement basse pression, et une bague de maintien extérieure, reliée au boîtier de protection.

De manière avantageuse, un moyen de verrouillage verrouille la position axiale du pignon d'entraînement BP avec le pignon de prise de mouvement, un écrou de verrouillage étant vissé sur un filetage formé sur la face externe du pignon d'entraînement basse pression.

De préférence, le pignon d'entraînement BP comprend une partie amont radiale supportant une denture et une partie aval cylindrique sur laquelle est montée extérieurement le palier de positionnement axial.

De préférence encore, la denture du pignon d'entraînement BP est orientée vers l'aval.

L'invention concerne également un procédé de montage d'un moteur selon la revendication 10, comportant les étapes consistant à :
- monter le rotor haute pression;
- monter le module de prise de mouvement avec les arbres radiaux de transmission dans un boîtier de protection solidaire du carter intermédiaire du moteur, le palier de positionnement axial étant solidaire avec le boîtier de protection;
- positionner le pignon d'entraînement basse pression coaxialement et intérieurement au palier de positionnement axial ;
- caler la position axiale du pignon d'entraînement basse pression avec le pignon de transmission de mouvement ;
- verrouiller la position du pignon d'entraînement basse pression par rapport au palier de positionnement axial; le pignon d'entraînement basse pression étant alors supporté par le palier de positionnement axial; et
- insérer l'arbre du rotor basse pression en faisant coopérer les cannelures de transmission de puissance du pignon d'entraînement basse pression avec les cannelures de transmission de puissance de l'arbre.

L'invention sera mieux comprise à l'aide de la description suivante de sa forme de réalisation préférée, en référence au dessin annexé, dans lequel :
la figure 1 représente une vue en coupe d'un moteur de l'art antérieur dans lequel un pignon d'entraînement BP est solidaire de l'arbre du rotor BP;
la figure 2 représente une vue en coupe d'un moteur de l'invention dans lequel un pignon d'entraînement BP est supporté par un palier de positionnement axial;
la figure 3 représente une vue rapprochée du pignon de la figure 2 ; et
la figure 4 représente une vue en coupe, selon deux axes, représentant le palier de positionnement axial de l'invention.

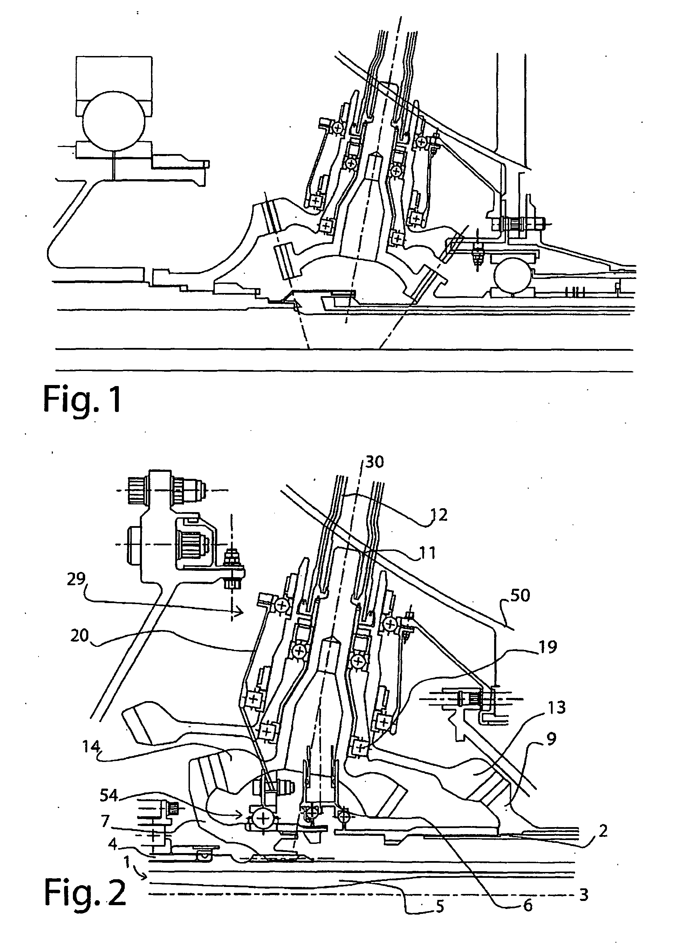

En référence à la figure 2, le moteur de l'invention est un moteur à turbine à gaz à double corps, comportant un rotor basse pression (BP) 1 et un rotor haute pression (HP) 2, montés rotatifs autour de l'axe 3 du moteur. Ce type de moteur est bien connu de l'homme du métier. Il peut s'agir d'un turboréacteur ou d'un turbopropulseur, par exemple. Il s'agit en fait de tout moteur comportant un compresseur et une turbine, double corps, avec un corps basse pression et un corps haute pression. Par interne ou externe, ou intérieur ou extérieur, on entendra, dans la description, interne ou externe, ou intérieur ou extérieur, au moteur, radialement, par rapport à son axe 3.

Plus précisément, le moteur comporte fonctionnellement, d'amont en aval dans le sens d'écoulement des gaz, une soufflante, un compresseur, une chambre de combustion, une turbine et une tuyère d'éjection. Comme il est à double corps, il comporte un compresseur BP, en amont d'un compresseur HP, et une turbine HP, en amont d'une turbine BP. Le rotor de la soufflante est solidaire de l'arbre 4 du compresseur BP, lui-même rendu solidaire de l'arbre 5 de la turbine BP. Le rotor BP 1 comporte donc ces trois éléments solidaires. L'arbre 5 de la turbine BP s'étend coaxialement à l'intérieur du rotor HP 2, formé par le compresseur HP et la turbine HP, solidaires.

L'extrémité aval de l'arbre 4 du compresseur BP, solidaire de l'arbre 5 de la turbine BP, se situe juste en amont de l'extrémité amont du rotor HP 2. L'arbre 4 du compresseur BP est fixé coaxialement à l'extérieur de l'arbre 5 de la turbine BP. Un joint d'étanchéité 6 est prévu entre l'extrémité aval de l'arbre 4 du compresseur BP et l'extrémité amont du rotor HP 2, afin d'assurer l'étanchéité entre la zone qui se situe à l'extérieur, baignée dans un brouillard d'huile de lubrification, et la zone qui se situe à l'intérieur, où circule principalement de l'air.

Les arbres 4, 5 de rotor sont supportés par des paliers dans le carter intermédiaire 50 du moteur.

L'arbre 4 du compresseur BP comporte, à proximité de son extrémité aval, un pignon 7 d'entraînement, que l'on nommera pignon d'entraînement BP 7. Ce pignon d'entraînement BP 7 se situe en aval du palier aval de l'arbre 4 du compresseur BP. Le rotor HP 2 comporte, à proximité de son extrémité amont, un pignon 9 d'entraînement, que l'on nommera pignon d'entraînement HP 9. Ce pignon d'entraînement HP 9 se situe en amont du palier amont du rotor HP 2.

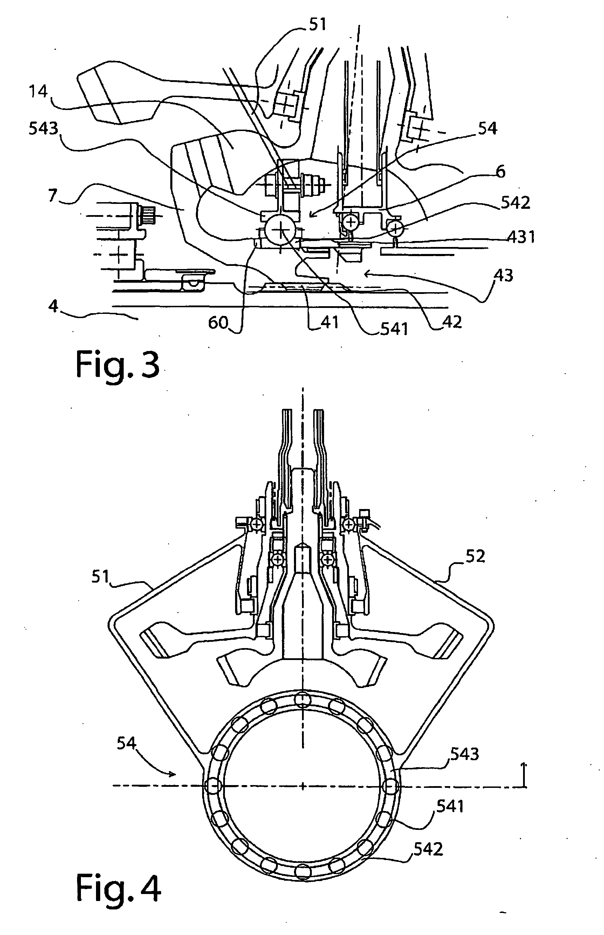

En référence à la figure 3, le pignon d'entraînement BP 7 se présente sous la forme d'une couronne qui s'étend coaxialement à l'extérieur de l'arbre 4 du compresseur BP. Le pignon d'entraînement BP 7 est supporté par un palier de positionnement axial 54 fixé de manière solidaire au carter intermédiaire 50. Le palier de positionnement axial 54 se présente ici sous la forme d'un roulement à billes 54 qui s'étend coaxialement à l'extérieur du pignon d'entraînement BP 7. Le roulement à billes 54 est maintenu fixement par deux bras de support 51, 52 du carter intermédiaire 50 représentés sur la figure 4, les bras 51, 52 de support étant sensiblement radiaux.

Les bras 51, 52 de support possèdent ici une section carrée mais des bras ayant une forme de section différente pourraient également convenir.

En référence à la figure 3, le roulement à billes 54 comprend un ensemble de billes 541 maintenues entre une bague de maintien intérieure 542 et une bague de maintien extérieure 543. La bague de maintien extérieure 543 est fixée, ici à l'aide d'une vis, à une bride des bras de support 51, 52, tandis que la bague de maintien intérieure 542 est en contact surfacique avec la face externe du pignon d'entraînement BP 7. Le pignon d'entraînement BP 7 comprend une portion amont sensiblement radiale sur laquelle est ménagée une denture destinée à correspondre avec une denture d'un pignon d'entraînement d'une machine auxiliaire qui sera détaillé par la suite. Le pignon d'entraînement BP 7 comprend en outre une portion aval sensiblement cylindrique en contact avec la bague intérieure du roulement à billes 54. Ainsi, le roulement à billes 54 est monté en aval de la denture du pignon d'entraînement BP 7, extérieurement et coaxialement audit pignon d'entraînement BP 7. Le pignon d'entraînement peut ainsi être inséré par l'amont du moteur dans le roulement à billes 54. Le pignon d'entraînement BP 7 comporte une cale qui permet de régler le positionnement axial entre le pignon d'entraînement BP 7 et le roulement à billes 54. La cale se présente sous la forme de bagues de cale 60 de différentes épaisseurs longitudinales dont le diamètre est sensiblement égal au diamètre du roulement à billes 54. Une telle bague de cale 60 se glisse axialement entre la partie aval cylindrique du pignon d'entraînement BP 7 et le roulement à billes 54 afin de compenser d'éventuelles tolérances de fabrication des pignons d'entraînement 7, 14.

La partie aval cylindrique du pignon d'entraînement est alors supportée par le palier de positionnement axial 54, aucune autre pièce ne venant maintenir le pignon préalablement à l'insertion de l'arbre BP. Le palier 54 permet le support ainsi que le positionnement axial du pignon 7 par l'intermédiaire d'une bague de cale 60 qui se glisse axialement sur la partie aval cylindrique du pignon 7.

Des cannelures de transmission de puissance 41 sont formées sur la face interne du pignon d'entraînement basse pression 7, les cannelures 41 étant orientées axialement afin de coopérer avec des cannelures de transmission de puissance axiales 42 formées sur la face externe de l'arbre 4 du rotor basse pression 1.

Les deux ensembles de cannelures 41, 42 coopèrent pour ne permettre qu'un déplacement axial du pignon d'entraînement BP 7 par rapport à l'arbre 4 du compresseur BP ce qui facilite son positionnement axial.

En référence à la figure 3, le pignon d'entraînement BP 7 et l'arbre 4 du compresseur BP sont fixés par un écrou de verrouillage axial 43 qui se visse dans un filetage formé sur la face externe du pignon d'entraînement BP 7. Le vissage de l'écrou 43 permet de maintenir solidairement le pignon d'entraînement BP 7, la bague de cale 60 et le roulement à billes 54.

En référence à la figure 2, le moteur comporte un arbre radial 11 de transmission du mouvement de l'arbre BP, que l'on nommera arbre radial de transmission BP 11, et un arbre radial 12 de transmission du mouvement de l'arbre HP, que l'on nommera arbre radial de transmission HP 12.

Les arbres radiaux de transmission BP 11 et HP 12 sont entraînés en rotation par un moyen d'entraînement formant un module 29 de prise de mouvement sur les pignons d'entraînement BP 7 et HP 8.

L'arbre radial de transmission HP 12 est connecté et solidaire, à son extrémité interne, à un pignon 13 de prise de mouvement du module 29, que l'on nommera pignon de prise de mouvement HP 13, agencé pour engrener avec le pignon d'entraînement HP 9. L'arbre radial de transmission BP 11 est connecté et solidaire, à son extrémité interne, à un pignon 14 de prise de mouvement du module 29, que l'on nommera pignon de prise de mouvement BP 14, agencé pour engrener avec le pignon d'entraînement BP 7. Le pignon de prise de mouvement BP 14 est coaxial au pignon de prise de mouvement HP 13, de diamètre supérieur à ce dernier et situé du côté externe par rapport à lui.

Entre les arbres radiaux de transmission 12, 11 est monté un ensemble de paliers, permettant la rotation des arbres radiaux 12, 11, l'un par rapport à l'autre, de manière co-rotative ou contrarotative selon le mode de rotation des rotors HP 2 et BP 1.

Les arbres radiaux de transmission 12, 11 sont maintenus dans un boîtier 20 du module de prise de mouvement 29 du moteur solidaire du carter intermédiaire 50, que l'on nommera boîtier 20. Ce boîtier 20 est de forme tubulaire et s'étend co-axialement aux arbres radiaux de transmission HP 12 et BP 11.

Le montage du pignon d'entraînement BP 7 et son positionnement vont maintenant être expliqués plus en détails.

Lors du montage du moteur, le rotor HP 2 est tout d'abord monté. On monte ensuite le boîtier 20 du module de prise de mouvement 29. Autrement dit, le module de prise de mouvement 29 a été préalablement monté et il est directement monté, "en bloc", sur le moteur. Le boîtier 20 est fixé à la bride de la structure fixe du moteur, le boîtier étant alors solidaire du carter intermédiaire 50. Lors du montage du module 29, le pignon de prise de mouvement HP 13 de l'arbre radial de transmission HP 12 vient engrener avec le pignon d'entraînement HP 9 du rotor HP 2.

On emmanche alors les arbres radiaux de transmission 11, 12 dans un bras radial du moteur. Les arbres radiaux de transmission 11, 12 s'étendent dans un bras du carter intermédiaire, qui est un carter structural, faisant partie de la structure fixe du turboréacteur, dont l'enveloppe externe s'étend dans la continuité du carter de soufflante, et auquel sont généralement reliés les mâts de fixation à l'aéronef dont le turboréacteur est destiné à participer à la propulsion.

On fixe ensuite le roulement à billes 54 avec le boîtier de protection 20 qui devient alors solidaire du carter intermédiaire 50 du moteur. Les billes 541 du roulement 54 sont maintenues entre la bague de maintien intérieure 542 et la bague de maintien extérieure 543 qui est reliée au boîtier de protection 20 par l'intermédiaire des bras de support 51, 52.

On positionne le pignon d'entraînement basse pression 7 coaxialement et intérieurement au roulement 54, ce qui lui permet de se translater axialement.

Dans une étape d'estimation des écarts, on estime les dimensions de la cale entre le pignon d'entraînement basse pression 7 et le pignon 14 d'entraînement de l'arbre radial 11 de transmission.

On retire le pignon d'entraînement basse pression 7, on enfile axialement une bague de cale 60 d'épaisseur adaptée extérieurement au pignon 7 et on repositionne le pignon d'entraînement basse pression 7 coaxialement et intérieurement au roulement 54.

On verrouille la position du pignon d'entraînement basse pression 7 par rapport au roulement 54 en vissant l'écrou de verrouillage 43 dans un filetage formé dans la face extérieure du pignon roulement 7 alors supporté par le roulement 54.

On insère l'arbre 4 du rotor basse pression par l'arrière du moteur en faisant coopérer les cannelures de transmission de puissance 41 du pignon d'entraînement basse pression 7 avec les cannelures de transmission de puissance 42 du rotor basse pression 1.

On s'affranchit ainsi d'étapes itératives de positionnement et de dimensionnement du pignon d'entraînement BP 7.

Le module de prise de mouvement 29, les rotors BP 1 et HP 2 et les arbres radiaux de transmission BP 11 et HP 12 sont ainsi montés les uns par rapport aux autres, le moyen d'entraînement des arbres radiaux de transmission 11, 12 étant bien mis en place.

Lors du fonctionnement du moteur, les rotors BP 1 et HP 2 tournent, dans le même sens ou dans un sens différent selon le mode de rotation du moteur, les cannelures de transmission de puissance 42 de l'arbre 4 du rotor BP 1 coopérant avec les cannelures de transmission de puissance 41 du pignon d'entraînement basse pression 7 qui entre en rotation et engrène avec le pignon de prise de mouvement BP 14 solidaire de l'arbre radial de transmission BP 11. La bague de maintien intérieure 542 du roulement 54 entre en rotation tandis que la bague de maintien extérieure 543 demeure immobile.

Les pignons d'entraînement BP 7 et HP 9 entraînent en rotation les pignons de prise de mouvement BP 14 et HP 13 du module de prise de mouvement 29, qui entraînent en rotation les arbres radiaux de transmission BP 11 et HP 12.

Les arbres radiaux de transmission 11, 12 sont, à leur extrémité externe, reliés à un ou plusieurs boîtiers d'accessoires. Ainsi, chaque arbre radial de transmission 11, 12 peut entraîner un boîtier d'accessoires différent, ou alors les arbres 11, 12 sont couplés afin d'entraîner un même boîtier d'accessoires. A cet effet, les arbres 11, 12 peuvent par exemple entraîner les entrées d'un engrenage différentiel, dont la sortie est reliée à l'arbre d'entraînement du boîtier d'accessoires, de manière bien connue de l'homme du métier.

On peut noter que, dans la forme de réalisation de la figure, l'axe 30 des arbres radiaux de transmission 11, 12 ne forme pas un angle droit avec l'axe 3 du moteur. Les pignons d'entraînement 7, 9 des rotors 1, 2 et les pignons de prise de mouvement 14, 13 du module de prise de mouvement 29 sont structurellement agencés en conséquence. En fonction de la forme de réalisation choisie, ces pignons sont droits, coniques ou autre, agencés par l'homme du métier pour une bonne prise de mouvement.

## Revendications

1. Moteur à turbine à gaz à double corps comportant un carter intermédiaire, des paliers supportés par le carter intermédiaire (50), un rotor haute pression (2) et un rotor basse pression (1), montés dans lesdits paliers, au moins un boîtier d'accessoires, un moyen d'entraînement, entraînant des arbres radiaux et coaxiaux (11, 12) de transmission de mouvement vers le boîtier d'accessoires, le moyen d'entraînement comportant un pignon d'entraînement haute pression (9) entraînant un desdits arbres radiaux (11, 12), relié au rotor haute pression (2), un pignon d'entraînement basse pression (7), coaxial et extérieur au rotor basse pression (1), relié au rotor basse pression (1) en amont du rotor haute pression (2) entraînant l'autre desdits arbres radiaux (11, 12), tel que le pignon d'entraînement basse pression (7) est supporté dans le carter intermédiaire (50) par un palier de positionnement axial (54), **caractérisé par le fait que** le pignon d'entraînement basse pression (7) comprend une partie amont radiale sur laquelle est ménagée une denture et une partie aval cylindrique sur laquelle est monté extérieurement le palier de positionnement axial (54).

2. Moteur selon la revendication 1 dont le moyen d'entraînement comprend deux pignons (13, 14) d'entraînement des arbres radiaux (11, 12) formant un module (29) de prise de mouvement monté dans un boîtier de protection (20) solidaire du carter intermédiaire (50).

3. Moteur selon l'une des revendications 1 et 2, dans lequel le pignon d'entraînement basse pression (7) comporte un moyen de calage (60) du pignon d'entraînement basse pression (7) par rapport au palier de positionnement axial (54) permettant de régler la position axiale du pignon d'entraînement basse pression (7) avec un pignon (14) de prise de mouvement solidaire de l'arbre radial (11) de transmission.

4. Moteur selon l'une des revendications 1 à 3, dans lequel des cannelures de transmission de puissance (41) sont formées sur la face interne du pignon d'entraînement basse pression (7).

5. Moteur selon la revendication 4, dans lequel des cannelures de transmission de puissance (42) sont formées sur la face externe de l'arbre (4) du rotor basse pression (1) et agencées pour coopérer avec les cannelures de transmission de puissance (41) du pignon d'entraînement basse pression (7).

6. Moteur selon l'une des revendications 2 à 5, dans lequel le palier de positionnement axial (54) se présente sous la forme d'un roulement à billes (54) dont les billes (541) sont maintenues entre une bague de maintien intérieure (542), reliée au pignon d'entraînement basse pression (7), et une bague de maintien extérieure (543), reliée au boîtier de protection (20).

7. Moteur selon l'une des revendications 3 à 6, dans lequel un moyen de verrouillage (43) verrouille la position axiale du pignon d'entraînement basse pression (7) avec le pignon (14) de prise de mouvement.

8. Moteur selon la revendication précédente, dans lequel le moyen de verrouillage (43) est un écrou de verrouillage vissé sur un filetage de verrouillage formé sur la face externe du pignon d'entraînement basse pression (7).

9. Moteur selon la revendication 8, dans lequel la denture du pignon d'entraînement basse pression (7) est orientée vers l'aval.

10. Procédé de montage d'un moteur selon les revendications 2, 5 et l'une des revendications 7 à 9, comportant les étapes consistant à :
- monter le rotor haute pression (2);
- monter le module (29) de prise de mouvement avec les arbres radiaux (11, 12) de transmission dans un boîtier de protection (20) solidaire du carter intermédiaire du moteur (50), le palier de positionnement axial (54) étant solidaire avec le boîtier de protection (20) ;
- positionner le pignon d'entraînement basse pression (7) coaxialement et intérieurement au palier de positionnement axial (54) ;
- caler la position axiale du pignon d'entraînement basse pression (7) avec le pignon (14) de transmission de mouvement ;
- verrouiller la position du pignon d'entraînement basse pression (7) par rapport au palier de positionnement axial (54) ; le pignon d'entraînement basse pression (7) étant alors supporté par le palier de positionnement axial (54) ; et
- insérer l'arbre (4) du rotor basse pression (1) en faisant coopérer les cannelures de transmission de puissance (41) du pignon d'entraînement basse pression (7) avec les cannelures de transmission de puissance (42) de l'arbre (4).

## Claims

1. A twin-shaft gas turbine engine comprising an intermediate casing, bearings supported by the intermediate casing (50), a high-pressure rotor (2) and a low-pressure rotor (1), mounted in said bearings, at least one auxiliary gear-box, a driving means, driving the radial and coaxial shafts (11, 12) for transmitting a motion to the auxiliary gear-box, the driving means comprising a high-pressure drive pinion (9) driving one of said radial shafts (11, 12), connected to the high-pressure rotor (2), a low-pressure drive pinion (7), coaxial to and outside of the low-pressure rotor (1), connected to the low pressure rotor (1) upstream from the high-pressure rotor (2) driving the other of said radial shafts (11, 12), such that the low-pressure drive pinion (7) is supported in the intermediate casing (50) by an axial positioning bearing (54), **characterised in that** the low-pressure drive pinion (7) comprises an upstream radial portion on which is configured a tooth and a downstream cylindrical portion to which the axial positioning bearing (54) is externally mounted.

2. The engine according to claim 1, wherein the driving means comprises two pinions (13, 14) for driving the radial shafts (11, 12) providing a power take-off module (29) mounted in a protective box (20) integral with the intermediate casing (50).

3. The engine according to one of claims 1 and 2, wherein the low-pressure drive pinion (7) comprises a means (60) for bracing the low-pressure drive pinion (7) with respect to the axial positioning bearing (54) such that the axial position of the low-pressure drive pinion (7) can be adjusted with a power take-off pinion (14) integral with the radial transmission shaft (11).

4. The engine according to one of claims 1 to 3, wherein power transmission splines (41) are provided on the inner face of the low-pressure drive pinion (7).

5. The engine according to claim 4, wherein power transmission splines (42) are provided on the outer face of the shaft (4) of the low-pressure rotor (1) and arranged for cooperating with the power transmission splines (41) of the low-pressure drive pinion (7).

6. The engine according to one of claims 2 to 5, wherein the axial positioning bearing (54) is in a form of a ball bearing (54) having balls (541) held between an inside retaining ring (542), connected to the low-pressure drive pinion (7), and an outside retaining ring (543), connected to the protective box (20).

7. The engine according to one of claims 3 to 6, wherein a locking means (43) locks the axial position of the low-pressure drive pinion (7) with the power take-off pinion (14).

8. The engine according to the preceding claims, wherein the locking means (43) is a locking nut screwed onto a screwing thread provided on the outer face of the low-pressure drive pinion (7).

9. The engine according to claim 8, wherein the tooth of the low-pressure drive pinion (7) is directed downstream.

10. A method for mounting an engine according to claims 2, 5 and one of claims 7 to 9, comprising the steps of
- mounting the high-pressure rotor (2);
- mounting the power take-off module (29) with the radial transmission shafts (11, 12) in a protective box (20) integral with the intermediate casing (50) of the engine, the axial positioning bearing (54) being integral with the protective box (20);
- positioning the low-pressure drive pinion (7) coaxially and internally to the axial positioning bearing (54);
- bracing the axial position of the low-pressure drive pinion (7) with the power take-off pinion (14);
- locking position of the low-pressure drive pinion (7) with respect to the axial positioning bearing (54); the low-pressure drive pinion (7) being then supported by the axial positioning bearing (54); and
- inserting the shaft (4) of the low-pressure rotor (1) by causing the power transmission splines (41) of the low-pressure drive pinion (7) to cooperate with the power transmission splines (42) of the shaft (4).

## Patentansprüche

1. Zweiwelliger Gasturbinenmotor, umfassend ein Zwischengehäuse, Lager, getragen vom Zwischengehäuse (50), einen Hochdruckrotor (2) und einen Niederdruckrotor (1), montiert in den Lagern, mindestens einen Zubehörkasten, ein Antriebsmittel, das radiale und koaxiale Wellen (11, 12) zur Übertragung von Bewegung auf die Zubehörkästen antreibt, wobei das Antriebsmittel ein Hochdruckantriebszahnrad (9) umfasst, das eine der radialen Wellen (11, 12) , verbunden mit dem Hochdruckrotor, antreibt, ein Niederdruckantriebszahnrad (7), koaxial zum und außerhalb des Niederdruckrotors (1), verbunden mit dem Niederdruckrotor (1) oberhalb des Hochdruckrotors (2), der die andere der radialen Wellen (11, 12) antreibt, so dass das Niederdruckantriebszahnrad (7) in einem Zwischengehäuse (50) von einem axial positionierten Lager (54) getragen wird, **dadurch gekennzeichnet, dass** das Niederdruckantriebszahnrad (7) einen vorgelagerten radialen Teil umfasst, der eine Verzahnung trägt, und einen nachgelagerten zylindrischen Teil, auf dem außen das axial positionierte Lager (54) montiert ist.

2. Motor nach Anspruch 1, wobei das Antriebsmittel zwei Zahnräder (13, 14) zum Antrieb der radialen Wellen (11, 12) umfasst, die ein Antriebsmodul (29) bilden, montiert in einem Schutzgehäuse (20), das mit dem Zwischengehäuse einstückig ist.

3. Motor nach einem der Ansprüche 1 und 2, wobei das Niederdruckantriebszahnrad (7) ein Mittel (60) zur Anpassung des Niederdruckantriebszahnrads (7) bezüglich des axial positionierten Lagers (54) umfasst, das es erlaubt, die axiale Position des Niederdruckantriebszahnrads (7) mit einem Antriebszahnrad (14) zu regulieren, das mit der radialen Übertragungswelle (11) einstückig ist.

4. Motor nach einem der Ansprüche 1 bis 3, wobei Keilverzahnungen zur Kraftübertragung (41) auf der Innenseite des Niederdruckübertragungszahnrades (7) gebildet sind.

5. Motor nach Anspruch 4, wobei die Keilverzahnungen zur Kraftübertragung (42) auf der Außenseite der Welle (4) des Niederdruckrotors (1) gebildet und angeordnet sind, um mit den Keilverzahnungen zur Kraftübertragung (41) des Niederdruckübertragungszahnrades (7) zusammenzuarbeiten.

6. Motor nach einem der Ansprüche 2 bis 5, wobei das axial positionierte Lager (54) die Form eines Kugellagers (54) aufweist, dessen Kugeln (541) zwischen einem inneren Haltering (542), verbunden mit dem Niederdruckübertragungszahnrad (7), und einem äußeren Haltering (543), verbunden mit dem Schutzgehäuse (20), gehalten werden.

7. Motor nach einem der Ansprüche 3 bis 6, wobei ein Verriegelungsmittel (43) die axiale Position des Niederdruckantriebszahnrads (7) mit dem Antriebszahnrad (14) verriegelt.

8. Motor nach dem vorhergehenden Anspruch, wobei das Verriegelungsmittel (43) eine Verriegelungsmutter ist, die auf ein Verriegelungsgewinde geschraubt ist, das auf der Außenseite des Niederdruckantriebszahnrads (7) gebildet ist.

9. Motor nach Anspruch 8, wobei die Verzahnung des Niederdruckantriebszahnrads (7) nach unten gerichtet ist.

10. Verfahren zur Montage eines Motors nach Anspruch 2, 5 und einem der Ansprüche 7 bis 9, umfassend die Schritte besehend aus:
- Montieren des Hockdruckrotors (2);
- Montieren des Antriebsmoduls (29) mit den radialen Übertragungswellen (11, 12) in einem Schutzgehäuse (20), das mit dem Zwischengehäuse des Motors (50) einstückig ist, wobei das axial positionierte Lager (54) mit dem Schutzgehäuse (20) einstückig ist;
- Positionieren des Niederdruckantriebszahnrads (7) koaxial zum und innerhalb des axial positionierten Lager(s) (54);
- Anpassen der axialen Position des Niederdruckantriebszahnrads (7) an das Zahnrad zur Übertragung der Bewegung (14).
- Verriegeln der Position des Niederdruckantriebszahnrads (7) bezüglich des axial positionierten Lagers (54); wobei das Niederdruckantriebszahnrad (7) dann vom axial positionierten Lager (54) getragen wird; und
- Einführen der Welle (4) des Niederdruckrotors (1), indem die Keilverzahnungen zur Kraftübertragung (41) des Niederdruckantriebszahnrads (7) mit den Keilverzahnungen zur Kraftübertragung (42) der Welle (4) in Zusammenarbeit gebracht werden.
